# EUROPÄISCHE PATENTSCHRIFT

(11) **EP 1 034 030 B1**
(45) Veröffentlichungstag und Bekanntmachung des Hinweises auf die Patenterteilung: **19.03.2003**
(21) Anmeldenummer: 99969353.4
(22) Anmeldetag: 22.09.1999
(51) Int. Cl.: B01F 9/10, A01C 1/06, A23B 9/14, B01J 8/24

(54) **EINRICHTUNG ZUR TROCKNUNG SCHÜTTFÄHIGER PRODUKTE**
DEVICE FOR DRYING POURABLE PRODUCTS
DISPOSITIF POUR LE SECHAGE DE PRODUITS APTES A L'ECOULEMENT

(30) Priorität: 24.09.1998 WO PCT/DE98/02843
(43) Veröffentlichungstag der Anmeldung: 13.09.2000
(73) Patentinhaber: Glatt Systemtechnik GmbH, 01277 Dresden (DE)
(72) Erfinder: BRETSCHNEIDER, Frank, D-01465 Liegau-Augustusbad (DE); PETER, Bruno, D-37574 Einbeck (DE); BRÜCKNER, Jürgen, D-01157 Dresden (DE)
(74) Vertreter: Pätzelt, Peter, Dipl.-Ing.
(86) Internationale Anmeldenummer: DE9903095
(87) Internationale Veröffentlichungsnummer: WO00016887

(56) Entgegenhaltungen:
- DE-A- 1 938 797
- DE-A- 3 222 890
- DE-A- 3 337 830
- DE-A- 3 705 343
- DE-A- 4 411 058
- US-A- 4 063 715
- US-A- 4 504 020
- US-A- 4 724 794
- PATENT ABSTRACTS OF JAPAN vol. 1995, no. 05, 30. Juni 1995 (1995-06-30) & JP 07 047261 A (HOSOKAWA MICRON CORP), 21. Februar 1995 (1995-02-21)
- PATENT ABSTRACTS OF JAPAN vol. 007, no. 039 (C-151), 17. Februar 1983 (1983-02-17) & JP 57 190643 A (FUJI PAUDARU KK), 24. November 1982 (1982-11-24)

## Beschreibung

### Technisches Gebiet

Die Erfindung betrifft eine Einrichtung zur Trocknung schüttfähiger Produkte innerhalb einer Rotorkammer, in der die schüttfähigen Produkte von einem Rotor mit vertikaler Rotorachse in eine radial-periphere Umwälzung versetzt werden.

Zur besseren Verständlichkeit werden nachfolgend die in der vorliegenden Erfindung verwendeten Begriffe genauer definiert.

Ein Produkt kann grundsätzlich beliebiger Art sein, soweit es möglich ist, dieses Produkt in eine radial-periphere Umwälzung zu versetzen. Deshalb wird das Produkt auch konkreter als schüttfähiges Produkt bezeichnet. In der Praxis handelt es sich regelmäßig um materialspezifisch homogene Produktteilchen oder um Kerne, auf die in vorhergegangenen Verfahrensstufen eine beliebige feuchte Hüllschicht aufgebracht wurde. Auch kann die Aufbringung einer feuchten Hüllschicht parallel zur Trocknung erfolgen, derart dass die Hüllschicht während und nach dem Aufbringen sofort getrocknet wird.

Schüttfähige Produkte können dabei alle festen Partikel, Teile oder Elemente sein, die von einem Rotor in eine radial-periphere Umwälzung versetzt werden können, z. B. Granulate, Pellets, Körner, Tabletten, Pillen u.ä. Alle derartigen Produkte können homogen sein, ein Agglomerat oder ein bereits vorher mit einer oder mehreren Schichten versehener Kern sein.

Eine Hüllschicht kann aus einem Stoff bestehen oder aus einem Gemisch mehrerer Stoffe aufgebaut werden.

### Stand der Technik

Nach dem Stand der Technik sind verschiedene Verfahren und Einrichtungen zur Trocknung von Granulaten oder schüttfähigen Produkten bekannt.

Bei den Verfahren der Wirbelbett-Trocknung wird das Produkt von unten mit einem Trockengas beaufschlagt, derart dass das Produkt aufgewirbelt wird, wobei die Trockenluft die Feuchtigkeit von den Produkten abführt.

Die JP 07047261 A gibt eine Einrichtung zur Behandlung von Teilchen nach der Wirbelbett-Trocknung an, bei der das Trockengas durch eine rotierende horizontale gasdurchlässige Scheibe geleitet wird, wobei der Gasdurchlass im äußeren Bereich größer ist als in Achsnähe. Die Teilchen, die sich oberhalb der Scheibe befinden, werden durch die Rotation der Scheibe radial nach außen bewegt und durch das Trockengas aufgewirbelt.

Zum Umwälzen von Produkten in einer Rotorkammer ist z. B. die DE 4411058 C2 bekannt. Diese gibt eine Vorrichtung zum Beschichten von körnigem Gut, insbesondere zum Beschichten von Saatgut mit Chemikalien wie Beizmittel, an.

Die Vorrichtung weist eine konisch nach oben erweiterte Seitenwand eines hochtourig drehenden Mischzylinders auf, der um eine senkrechte Achse drehbar ist. Die flüssigen Chemikalien werden über eine Sprühvorrichtung auf das im Mischzylinder befindliche körnige Gut aufgesprüht. Zur besseren Durchmischung des körnigen Gutes in der Mischkammer sind an einem Austragring oberhalb des Mischzylinders gebogene Ableitflügel angeordnet, die das Gut umlenken und in den konischen Mischzylinder nach unten zurück leiten. Dabei sind die Ableitflügel derart ausgebildet, dass das körnige Gut vom äußeren oberen Rand des Mischzylinders in das Zentrum umgelenkt werden.

Die Lösungen nach dem Stand der Technik beinhalten alle die Gefahr, dass empfindliche Produkte, bzw. die Kerne mit einer empfindlichen Hüllschicht, welche mindestens zeitweise eine feuchte und damit weiche Oberfläche aufweist, derart durch Druck- und Reibungskräfte belastet werden, dass die Produkte oder die Hüllschichten, in unzulässiger Weise beschädigt werden.

### Darstellung der Erfindung

Der Erfindung liegt damit als Aufgabe zugrunde, eine Einrichtung zur Trocknung schüttfähiger Produkte anzugeben, mit der die Produkte schonend und wirksam getrocknet werden können. Insbesondere sollen schüttfähiger Produkte mit einer weichen und empfindlichen Oberflächenschicht getrocknet werden können.

Die Erfindung löst die Aufgabe für die Einrichtung durch die Merkmale des Anspruchs 1. Vorteilhafte Weiterbildungen der Erfindung sind in den Unteransprüchen 2 bis 5 gekennzeichnet und werden nachstehend zusammen mit der Beschreibung der bevorzugten Ausführung der Erfindung, einschließlich der Zeichnung, näher dargestellt.

Das Wesen der Erfindung besteht darin, dass das zu trocknende Produkt in sehr schonender Weise in eine radial-periphere Umwälzung versetzt wird und gleichzeitig ein Trockengas durch flächige Gasdurchlässe im Kegelmantel-des-Rotors durch das umwälzende Produkt geleitet wird.

Die Bewegungrichtung des Produktes wird durch den Rotor und die Leitschaufeln dabei derart beeinflusst, dass die einzelnen Teichen des Produktes radial nach außen und oben bewegt werden und nachfolgend im wesentlichen durch die Schwerkraft auf den Rotor zurückfallen.

Nach Anspruch 2 wird dieser Prozess dadurch verbessert, dass das Produkt mittels Leitschaufeln, auf denen das Produkt abrollt, in eine zentrische Richtung umgelenkt wird. In einer weiteren Ausgestaltung nach Anspruch 3 können die Leitschaufeln auch einen Verstellmechanismus aufweisen, mit dem die Geometrie der Leitschaufeln verstellt werden kann. Damit kann die Einrichtung in universeller Art an die optimalen ümwälzcharakteristika von verschiedenen Produkten mit unterschiedlicher Konfiguration und Masse angepasst werden. Derartige Einrichtungen können auch genutzt werden, um sich verändernde Masseverhältnisse während der Trocknung auszugleichen.

Das Produkt wird sehr wirksam, praktisch an jedem Ort, vom Trockengas umströmt und keinen nachteiligen Druckbelastungen ausgesetzt. Die Art und die Strömungsgeschwindigkeit des Trockengases sowie dessen Temperatur wird maßgeblich von den spezifischen Bedingungen des jeweiligen Produktes beeinflusst.

Grundsätzlich ist die erfindungsgemäße Einrichtung als Chargenanlage konzipiert, da die Trocknung eine gewisse Zeit erfordert. Es ist aber auch möglich, die Einrichtung als Intervall-Durchlaufanlage zu betreiben. D.h. das zu trocknenden Produkt wird der Rotorkammer in Intervallen durch eine Einlassöffnung zugeführt und nach entsprechender Prozessdauer aus einer Auslassöffnung wieder ausgeschleust.

Dabei hat sich zur Ausschleusung eine Lösung bewährt, bei der in der Wand der Rotorkammer oberhalb des Ringspaltes zwischen dem Rotor und der Rotorkammer mindestens eine Klappe vorhanden ist, die geeignet ist, dass die Produkte, bei geöffneter Stellung der Klappe und bei drehendem Rotor, durch die Zentrifugalkräfte aus der Rotorkammer hinausbewegt werden.

Mit der erfindungsgemäßen Einrichtung können sehr effektiv und in einfacher schonender Weise empfindliche Produkte getrocknet werden. Die Produkte, insbesondere empfindliche weiche pastöse Hüllschichten auf Kernen, werden bei der Trocknung nicht wesentliche deformiert und sind in ihrer äußeren Konfiguration von hoher Gleichmäßigkeit.

Die Erfindung wird nachstehend an einem Ausführungsbeispiel näher erläutert.

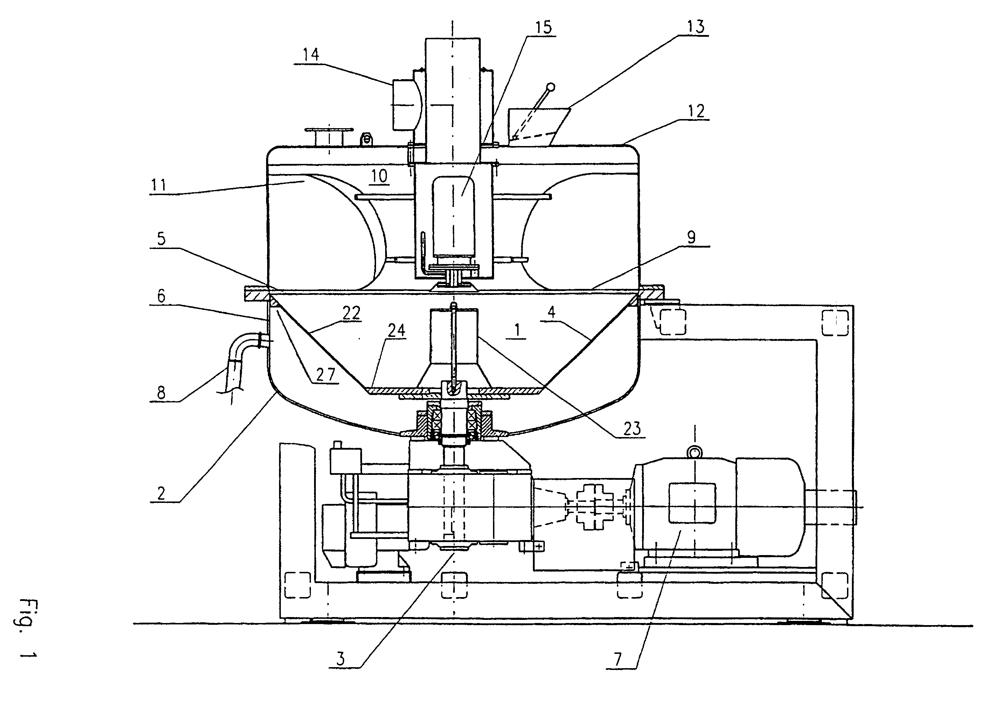

Die zugehörige Zeichnung zeigt in Figur 1 eine erfindungsgemäße Einrichtung in einer schematischen Schnittdarstellung.

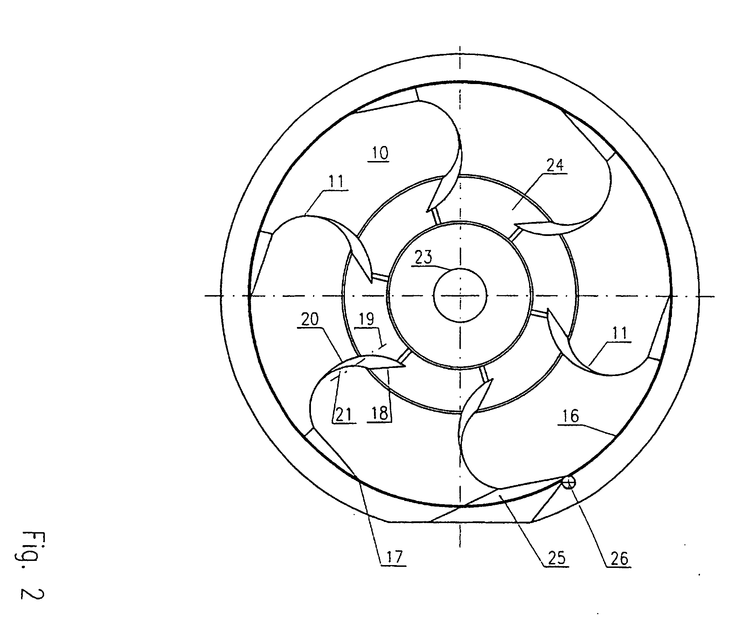

Figur 2 zeigt einen horizontalen Schnitt oberhalb der Leitschaufeln 11 gemäß Figur 1.

Im Ausführungsbeispiel sollen Samenkörner von relativ unterschiedlicher Größe und unterschiedlich ausgebildeter Form mit einer Hüllschicht beschichtet, parallel dazu angetrocknet und nachfolgend endgetrocknet werden.

Die Samenkörner, im Beispiel als Kerne bezeichnet, können in äqivalenter Weise auch Güter der chemischen Industrie, der Lebensmittel- oder Futtermittelindustrie, der Agrartechnik, der Pharmazie o. ä. Industriezweigen sein.

Die erfindungsgemäße Einrichtung in der Ausbildung nach Anspruch 2 besteht aus einer Rotorkammer 1 mit einem unteren Gehäuse 2, in dem zentrisch in einer vertikalen Rotorachse 3 ein teilweise kegelförmig ausgebildeter Rotor 4 angeordnet ist.

Der zentrische Teil des Rotors 4 ist mit einer zentrischen Rotorhülse 23 abgedeckt. Der radial anschließende Abschnitt 24 ist horizontal ausgebildet. Etwa in der Mitte des Radius beginnt ein Kegelmantel 22 mit einem Neigungswinkel von 50° zur Rotorachse 3.

Erfindungsgemäß ist im Ausführungsbeispiel der gesamte Kegelmantel 22 aus einem Lochblech mit Löchern von 0,8 Millimeter Durchmesser gefertigt.

Der obere Rand 5 des Rotors 4 reicht bis dicht an die innere Wandung 6 des unteren Gehäuses 2 heran.

Ein elektromotorischer Antrieb 7 für den Rotor 4 befindet sich unterhalb des unteren Gehäuses 2.

Der obere Rand 5 des Rotors 4 und die obere Kante des unteren Gehäuses 2 liegen im wesentlichen in einer Ebene 9. Oberhalb dieser Ebene 9 ist ein Leitschaufelring 10 angeordnet, wie er in Figur 2 in der Draufsicht (Schnitt oberhalb der Leitschaufeln 11 gemäß Figur 1) näher dargestellt ist. Zur besseren Übersichtlichkeit sind in Figur 1 nur zwei Leitschaufeln 11 angedeutet.

Oberhalb des Leitschaufelringes 10 befindet sich das obere Gehäuse 12, welches die Rotorkammer 1 nach oben abschließt. Im oberen Gehäuse 12 befinden sich eine Zuführungsöffnung 13 für die zu beschichtenden Kerne, eine Zuführung 14 für ein trockenes Ausgangsmaterial und eine zentrische Zuführung 15 für ein flüssiges Bindemittel.

Im Beispiel sind (Figur 2), bei einem Durchmesser des Leitschaufelringes 10 von ca. 1500 mm, sechs Leitschaufeln 11 angeordnet. Die Leitschaufeln 11 haben etwa die Höhe des Leitschaufelringes 10, wobei die äußere Kante 17 stufen- und kantenfrei an die innere Wandung 16 des Leitschaufelringes 10 angeformt, d. h. in der praktischen Ausführung angeschweißt und verschliffen, sind.

Die Leitschaufeln 11 weisen im Beispiel die Form eines Segmentes einer Spirale auf, wobei die äußere Kante 17 der polferne Punkt und die innere Kante 18 der polnahe Punkt des Segmentes der Spirale sind. Dabei erfüllt die Anformung der Spirale an die innere Wandung 6 im wesentlichen die theoretische Forderung, dass die äußeren Enden der Leitschaufeln 11 in Drehrichtung des Rotors 4 aus dem Kreis der inneren Wandung 6 der Rotorkammer 1 derart heraustreten, dass die Tangenten der inneren Wandung 6 und der Leitschaufeln 11 am Berührungspunkt im wesentlichen die gleiche Neigung aufweisen.

Die inneren Enden der Leitschaufeln 11, die Kanten 18, befinden sich etwa im mittleren Teil des Rotorradius.

Als vorteilhaft hat es sich erwiesen, wenn die vertikale Linie 19 etwa in der Mitte der Leitschaufeln 11 eine leichte Schrägstellung gegenüber der Lotrechten aufweist, derart dass die untere Kante 20 der Leitschaufeln 11 in Drehrichtung des Rotors 4 weiter ausgeformt ist als die obere Kante 21.

Zum Zwecke der Ausschleusung des fertigen Produktes aus der Rotorkammer 1 befindet sich in einer Leitschaufel 11 eine Ausschleusungsöffnung, die in der Verfahrensphase der Beschichtung und Endtrocknung durch eine Klappe 25 kahtenund spaltfrei verschlossen ist. Die Klappe 25 kann um den Drehpunkt 26 geschwenkt werden, wodurch die Ausschleusungsöffnung freigegeben wird.

Die erfindungsgemäße-Einrichtung soll nachfolgend in der Funktion näher beschrieben werden.

Wie bereits erwähnt, sollen Samenkörner gleichmäßig mit einer Hüllschicht beschichtet werden, so dass ein schüttfähiges Produkt mit einer gleichmäßigen sphärischen äußeren Form gebildet wird. Parallel und anschließend an diese Beschichtung sollen die beschichteten Samenkörner getrocknet werden.

Die Hüllschicht wird aus einem pulverförmigen Ausgangsmaterial und einem flüssigen Bindemittel aufgebaut.

Die Einbringung der zu beschichtenden Kerne in die Rotorkammer 1 erfolgt bei laufendem Rotor 4 im Ausführungsbeispiel chargenweise über die Zuführungsöffnung 13. Unmittelbar nach dem Auftreffen der Kerne auf dem Rotor 4 werden diese in eine radial-tangentiale und durch den Kegelmantel 22 im äußeren Rotorabschnitt zunehmend in eine vertikal-tangentiale Bewegungsrichtung versetzt.
Die Ausgangsstoffe zum Aufbau der Hüllschicht werden in der Folge langsam und parallel über die Zuführungen 14 bzw. 15 in die Rotorkammer 1 den Kernen zugeführt. Dabei wird über die Zuführung 14 im Ausführungsbeispiel pulverförmige Cellulose und über die zentrische Zuführung 15 flüssige Methylcellulose als Bindemittel eingebracht. Die Zuführung 14 ist schaufelartig ausgebildet, wodurch die pulverförmige Cellulose linienartig oberhalb des Rotors 4 auf die sich in Umwälzung befindlichen Kerne aufgebracht wird.

Die zentrische Zuführung 15 weist eine zentrisch rotierende Schleuderscheibe auf, die die als Bindemittel eingesetzte Methylcellulose kreisringförmig auf die Kerne verteilt. Durch Veränderung der Drehzahl der Schleuderscheibe, z: B. eine sinusförmige Drehzahländerung, kann die praktische Auftrefffläche wesentlich vergrößert werden.

Unterhalb des Rotors 4 wird bereits vor dem Einbringen der Kerne über die beiden Gaseinlässe 8 ein Trockengas eingeleitet. Dieses Trockengas durchströmt das Lochblech des Kegelmantels 22 sowie den Ringspalt zwischen dem oberen Rand 5 des Rotors 4 und der inneren Wandung 6 des unteren Gehäuses 2. Der Strom des Trockengases wird derart geregelt, dass die einzelnen Kerne, ohne wie nachfolgend mit einer Beschichtung, nicht aufgewirbelt werden, sondern das Trocknungsgas umströmt nur gleichmäßig intensiv durch das umwälzende Produkt. Das Produkt wird dabei leicht angehoben, so dass die Umwälzung mit außerordentlich geringer Oberflächenbelastung erfolgt. Die spezifische Art, wie das Trocknungsgas das Produkt umströmt ermöglicht dabei auch eine sehr wirksame Trocknung.

Das Produkt wird dann in einer besonders schonenden und wirksamen Weise bereits während der Herstellung des Produktes angetrocknet und später nach Abschluss der Herstellung des Produktes bis zu einem definierten Feuchtegrad endgetrocknet.

Durch die zentrische Rotorhülse 23 und den radial anschließenden horizontalen Abschnitt 24 des Rotors 4 wird gesichert, dass an jeder Stelle des Rotors die Fliehkraft stets größer ist als die Adhäsionskräfte der Ausgangsstoffe bzw. bereits teilbeschichtete Kerne untereinander und zum Rotor 4.

Wenn die Rotorhülse 23 nicht vorhanden ist, kann die Rotationskraft im Zentrum des Rotors 4 theoretisch den Wert Null haben und es kann zum Zusammenbacken von teilbeschichteten Kernen kommen.

Die Drehzahl des Rotors 4 wird so gewählt, dass die Kerne durch die kinetische Energie über den oberen Rand 5 des Rotors 4 hinaus bis in den Leitschaufelring 10 bewegt werden. Die Kerne bzw. die teilbeschichteten Kerne gelangen dabei in den Wirkbereich der Leitschaufeln 11 und rollen in der Folge schlag- und stoßfrei an der inneren Oberfläche der Leitschaufeln 11 entlang, wobei die vertikal-tangentiale Bewegungsrichtung der Kerne beim Eintritt in den Wirkbereich der Leitschaufeln 11 im wesentlichen umgelenkt und gleichzeitig mit einer zentrischen Richtung überlagert wird. Nach dem Verlassen der Leitschaufeln 11 fallen die Kerne wieder in den. Rotor 4, gelangen erneut in den Einfluss des Rotors 4 und der Kreislauf beginnt erneut.

Durch die spezifische erfindungsgemäße Einrichtung kommt es zu einer außerordentlich gleichmäßigen, intensiven Umwälzung der Kerne, wobei das Trockengas die Kerne gleichzeitig und allseitig umströmt. Die Kerne wälzen sich an der Einrichtung aber auch untereinander ab.

Entgegen der Lösungen nach dem Stand der Technik kommen die Kerne im gesamten Umwälzprozess mit keinen Flächen oder Kanten von Einbauteilen in eine Stoß- oder Schlagberührung.

Die Bewegung der Kerne variiert natürlich sehr stark, je nachdem, ob die Kerne im unteren Bereich der Leitschaufeln oder mehr im oberen Bereich umgewälzt werden. Der grundsätzliche Bewegungsäblauf bleibt jedoch stets der gleiche.

Nach Erreichen der technologisch erforderlichen Parameter wird die Zufuhr der Ausgangsstoffe beendet. Der Prozess der Umwälzung wird unter Einwirkung des Trockengases weiter fortgesetzt, bis die Hüllschicht den erforderlichen Trocknungsgrad aufweist.

Die Einrichtung kann unter Anwendung der Lösungen nach den Unteransprüchen und alternativer Ausbildungen nach dem Stand der Technik noch in einem relativ weiten Umfang variiert werden. So liegt es selbstverständlich im Schutzbereich der Erfindung, wenn das Produkt, nachdem es in einem vorherigen Prozess, z. B. in einer anderen Einrichtung, bereits mit einer Schicht ummantelt wurde und in der vorliegenden Einrichtung ausschließlich getrocknet wird. Dabei können auch spezifische und/oder erwärmte Trocknungsgase eingesetzt werden.

### Liste der verwendeten Bezugszeichen

- 1: Rotorkammer
- 3: vertikale Rotorachse
- 5: oberer Rand
- 7: elektromotorischer Antrieb
- 9: Ebene
- 11: Leitschaufel
- 13: Zuführungsöffnung
- 15: zentrische Zuführung
- 17: äußere Kante
- 19: vertikale Linie
- 21: obere Kante
- 23: zentrische Rotorhülse
- 25: Klappe
- 27 29: Konus

- 2: unteres Gehäuse
- 4: Rotor
- 6: innere Wandung
- 8: Gaseinlass
- 10: Leitschaufelring
- 12: oberes Gehäuse
- 14: Zuführung
- 16: innere Wandung
- 18: innere Kante
- 20: untere Kante
- 22: Kegelmantel
- 24: horizontaler Abschnitt
- 26 28 30: Drehpunkt

## Patentansprüche

1. Einrichtung zur Trocknung schüttfähiger Produkte mit einer Rotorkammer (1), in der ein Rotor (4) mit vertikaler Rotorachse (3) das schüttfähige Produkt umgewälzt und ein Trockengas zugeführt wird, **dadurch gekennzeichnet, dass**
- der Rotor (4) eine zentrische horizontale Fläche und einen Kegelmantel (22) aufweist, der zur Rotationsachse (3) um 20° bis 70° geneigt ist, derart dass sich die Stirnfläche des Kegelmantels (22) mit dem größeren Durchmesser oben befindet,
- dass der Kegelmantel (22) mindestens teilweise flächige Gasdurchlässe in Form von Lochungen oder Sieben aufweist, durch die im Wesentlichen das Trockengas in das umwälzende Produkt eingeleitet werden kann,
- und dass oberhalb des Rotors (4) im Bereich der Wandung der Rotorkammer (1) Leitschaufeln (11) angeordnet sind, derart dass das umwälzende Produkt, welches unter dem Einfluss der kinetischen Energie den Rotor (4) verlässt, an der Innenseite der Leitschaufeln (11) abrollt und in den Rotor (4) zurückfällt.

2. Einrichtung nach Anspruch 1, **dadurch gekennzeichnet, dass** die Leitschaufeln (11) statisch an der inneren Wandung (6) der Rotorkammer (1) angeordnet sind und im Querschnitt zur Rotorachse (3) im wesentlichen die Form eines Segmentes eines Kreises oder einer Spirale aufweisen, deren äußere Enden in Drehrichtung des Rotors (4) aus dem Kreis der inneren Wandung (6) der Rotorkammer (1) heraustreten, wobei die Tangenten der inneren Wandung (6) und der Leitschaufeln (11) am Berührungspunkt im wesentlichen die gleiche Neigung aufweisen, und deren innere Enden etwa im mittleren Teil des Rotorradius liegen.

3. Einrichtung nach Anspruch 2, **dadurch gekennzeichnet, dass** die Leitschaufeln (11) einen Verstellmechanismus aufweisen, mit dem die Form des Segmentes des Kreises bzw. der Spirale verändert werden kann.

4. Einrichtung nach einem der Ansprüche 1 bis 3, **dadurch gekennzeichnet, dass** der Rotor (4) in der Rotorkammer (1) austauschbar angeordnet ist.

5. Einrichtung nach Anspruch 4, **dadurch gekennzeichnet, dass** die Lochungen oder Siebe unterschiedliche Löchdurchmesser bzw. unterschiedliches Siebgewebe aufweisen.

## Claims

1. Device for drying pourable products, with a rotor chamber (1) in which a rotor (4) with a vertical rotor axis (3) circulates the pourable product and a dry gas is supplied, **characterized in that**
- the rotor (4) has a central horizontal surface and a cone shell (22) which is inclined to the axis of rotation (3) by 20° to 70°, in such a way that the end face of the cone shell (22) having the larger diameter is located at the top,
- **in that** the cone shell (22) has, at least partially, sheet-like gas passages in the form of perforations or screens, through which essentially the dry gas can be introduced into the circulating product,
- and **in that** guide vanes (11) are arranged above the rotor (4) in the region of the wall of the rotor chamber (1), in such a way that the circulating product, which leaves the rotor (4) under the influence of kinetic energy, rolls on the inside of the guide vanes (11) and falls back into the rotor (4).

2. Device according to Claim 1, **characterized in that** guide vanes (11) are arranged statically on the inner wall (6) of the rotor chamber (1) and, in cross section to the rotor axis (3), have essentially the shape of a segment of a circle or of a spiral, the outer ends of which emerge from the circle of the inner wall (6) of the rotor chamber (1) in the direction of rotation of the rotor (4), the tangents of the inner wall (6) and of the guide vanes (11) at the contact point having essentially the same inclination, and the inner ends of which lie approximately in the middle part of the rotor radius.

3. Device according to Claim 2, **characterized in that** the guide vanes (11) have an adjusting mechanism, by means of which the shape of the segment of the circle or of the spiral can be varied.

4. Device according to one of Claims 1 to 3, **characterized in that** the rotor (4) is arranged exchangeably in the rotor chamber (1).

5. Device according to Claim 4, **characterized in that** the perforations or screens have different hole diameters or different screen fabrics.

## Revendications

1. Dispositif pour le séchage de produits aptes à l'écoulement, comprenant une chambre de rotor (1), dans laquelle le produit apte à l'écoulement circule dans un rotor (4) avec un axe de rotor vertical (3) auquel un gaz de séchage est amené, **caractérisé en ce que**
- le rotor (4) présente une surface horizontale centrale et une enveloppe conique (22) qui est inclinée de 20° à 70° par rapport à l'axe de rotation (3), de telle sorte que la face frontale de l'enveloppe conique (22) avec le plus grand diamètre se trouve en haut,
- l'enveloppe conique (22) présente des passages de gaz au moins partiellement plats en forme de perforation ou de tamis, à travers lesquels esentiellement le gaz de séchage peut être introduit dans le produit en circulation,
- et **en ce que**, au-dessus du rotor (4), dans la région de la paroi de la chambre du rotor (1), des aubes (11) sont disposées de telle sorte que le produit en circulation, qui quitte le rotor (4) sous l'effet de l'énergie cinétique du rotor (4), tombe sur la face interne des aubes (11) et retombe dans le rotor (4).

2. Dispositif selon la revendication 1, **caractérisé en ce que** les aubes (11) sont disposées de manière statique sur la paroi intérieure (6) de la chambre du rotor (1) et présentent, en section transversale par rapport à l'axe du rotor (3) essentiellement la forme d'un segment de cercle ou d'une spirale, dont les extrémités extérieures dans la direction de rotation du rotor (4) ressortent du cercle de la paroi intérieure (6,) de la chambre du rotor (1), les tangentes à la paroi intérieure (6) et aux aubes (11) présentant au point de contact essentiellement la même pente et dont les extrémités intérieures se trouvent approximativement dans la partie centrale du rayon du rotor.

3. Dispositif selon la revendication 2, **caractérisé en ce que** les aubes (11) présentent un mécanisme de réglage avec lequel la forme du segment de cercle ou de la spirale peut être variée.

4. Dispositif selon l'une quelconque des revendications 1 à 3, **caractérisé en ce que** le rotor (4) est disposé de manière remplaçable dans la chambre du rotor (1).

5. Dispositif selon la revendication 4, **caractérisé en ce que** les perforations ou le tamis présentent des diamètres de trou différents ou des structures de tamis différentes.
